# EUROPEAN PATENT APPLICATION

(11) **EP 2 033 754 A1**
(43) Date of publication of application: **11.03.2009**
(21) Application number: 08162923.0
(22) Date of filing: 26.08.2008
(51) Int. Cl.: B29B 11/16, B29L 9/00, B29L 31/30, B29K 101/10, B29K 301/12, B29K 307/04

(54) **Method for manufacturing highly porous interlayers to toughen liquid-molded fabric-based composites**

(30) Priority: 07.09.2007 US 852127
(71) Applicant: The Boeing Company, Chicago, IL 60606-2016 (US)
(72) Inventor: Tsotsis, Thomas K., Orange, 92866-1513 (US)
(74) Representative: Witte, Weller & Partner

(57) **Abstract**

Methods are provided for producing preform materials for impact-resistant composite materials suitable for liquid molding. An interlayer (6) comprising a spunbonded, spunlaced, or mesh fabric is introduced between non-crimped layers (2) of unidirectional reinforcing fibers to produce a preform for use in liquid-molding processes to produce composite materials. Interlayer material remains as a separate phase from matrix resin after infusion, and curing of the preform provides increased impact resistance by increasing the amount of energy required to propagate localized fractures due to impact. Constructions having the interlayer materials melt-bonded to the reinforcing fibers demonstrate improved mechanical performance through improved fiber alignment compared to other fabrication and preforming methods.

## Description

### CROSS-REFERENCE TO RELATED APPLICATIONS

This application is a continuation-in-part of pending United States Serial No. 10/428,500 filed on May 2, 2003. The disclosure of the above application is incorporated herein by reference.

### FIELD

The present disclosure relates to cured composites built from layers of unidirectional fibers. In particular, the invention utilizes highly porous lightweight materials in conjunction with multilayer preforms to obtain cured articles with improved toughness.

### BACKGROUND

High-performance composite materials built of alternating layers of unidirectional reinforcing fibers have an advantageous combination of high strength and light weight. As such they find use in aerospace and other industries where such properties are critical. Generally, the composite materials are prepared by laying up a number of alternating layers wherein adjacent layers have unidirectional fibers running at different angles. The net effect of buildup of several layers of such unidirectional fabrics is to provide a composite material having exceptional strength, either quasi-isotropically, or in one or more particular directions.

Such composite materials may be produced as prepregs or as preforms. In prepregs, layers of unidirectional fabrics immersed or impregnated with a resin are laid-up into the shape of the part to be produced from the composite material. Thereafter, the laid-up part is heated to cure the resin and provide the finished composite part. In the preform approach, layers of unidirectional reinforcing fibers or woven, braided, or warp-knit fabric are laid up similarly to the way they are laid-up in prepregs. However, in the preform method, the layers are laid-up dry. Thereafter, the laid-up material is infused with resin in a liquid-molding process, and the molded part is heated to cure the resin as in the prepregs.

The alternating layers, or lamina, of reinforcing fibers provide the composite articles made from the prepreg or preform process with a great deal of strength, especially in directions that align with specific fiber directions. Accordingly, very strong lightweight parts may be produced, for example, as wings and fuselages of aircraft. Although the alternating lamina of reinforcing fibers provides strength, toughness or impact resistance is determined mainly by the properties of the cured resin. Impact-resistant or toughened resins are preferred because they are resistant to damage from impact. For example, any damage resulting from ground-maintenance impact (e.g. from tool drop, forklifts or other vehicles) may require replacement of the entire piece, because such composite materials are built up as a single piece. Furthermore, because impact damage in composite materials is generally not visible to the naked eye, it is important for such primary load-bearing structures to be able to carry their full design load after impact and prior to detection using non-destructive techniques.

In prepregs, the resin, typically an epoxy-based formulation, may be toughened by adding particles of a thermoplastic material to the conventional resin. These thermoplastic particles may either be soluble in the matrix resin and dissolve in the epoxy resin or may be insoluble and placed, during the prepregging operation (see, for example, U.S. Patent No. 5,028,478) on the surface of each layer. Upon cure, the thermoplastic resin in the cured epoxy matrix serves to limit crack propagation through the part. Preform materials may be stitched before resin infusion and cure to provide toughness and crack resistance. One drawback to stitching is the reduction of in-plane mechanical properties, particularly as the stitch density increases. The prepreg approach of applying particles of thermoplastic material to the resin before cure is not directly transferable to the liquid molding processes used to prepare preform articles. In the resin infusion of the liquid molding process, soluble thermoplastics tend to increase the melt-flow viscosity of the matrix resin unacceptably, while insoluble thermoplastic toughening particles tend to be filtered by the preform and thus may not be located uniformly between the plies in the preform.

Some prior developed laminated products have made use of a thermoplastic layer of sufficient permeability between the layers of reinforcing fibers so as not to inhibit liquid resin flow during a liquid molding process. One drawback inherent in such a process is that the preforms made of alternating layers of reinforcing fibers and thermoplastic resin layers may be less than perfectly stable during resin infusion. As a result, the reinforcing fibers and the thermoplastic resin layer can tend to move or shift during the liquid molding process. Such moving or shifting can be mitigated by stitching together the layers before infusion with the resin. Another drawback with the above-described process is that it is primarily effective for hand lay-up operations and not for automated lay-up operations, such as would be desired in the fabrication of large aircraft parts or in the continuous production of broad goods.

It would be desirable to provide a molded article made by a preform process in which the reinforcing fibers are held tightly in relative orientation to one another. It would further be desirable to provide a process for making such a preform article in widths and lengths feasible for producing large-scale parts, such as aircraft wings, from them. SUMMARY

In one embodiment, the present disclosure provides a multiaxial preform made up of reinforcing layers of unidirectional fibers. Non-woven interlayers made of spunbonded, spunlaced, or mesh fabric of thermoplastic fibers are disposed between and melt-bonded or stitched to the reinforcing layers. The multiaxial preform is used in a liquid-molding process by which resin is infused into the preform, followed by heating to gel and set the resin. The interlayers are permeable to permit the flow of resin during the liquid-molding operation. In a specific embodiment, the interlayer material is melt-bonded to at least one of the unidirectional layers, preferably on both sides. The layers are further held together with knit threads. The melt-bonded interlayers hold the unidirectional fibers in place during the resin infusion and subsequent curing of the resin to produce a fiber reinforced composite material. In one embodiment the unidirectional fibers are made of carbon fibers. The material making up the interlayers is chosen for compatibility with the resin upon curing. In one embodiment, the resin is an epoxy resin and the interlayer fibers are made of a polyamide.

The present disclosure also provides a method for manufacturing a multiaxial fabric made of reinforcing layers of unidirectional fiber, with non-woven interlayers disposed between the reinforcing layers. The method includes the operation of melt-bonding an interlayer material made of thermoplastic fibers to one or both sides of a unidirectional dry fabric to produce a dry unidirectional tape. Thereafter, a preform may be built up from the unidirectional tape by laying down the tape with at least one other layer or lamina of unidirectional fibers at angles between about -90° and +90° from the warp direction of the multiaxial fabric.

In one embodiment, alternating unidirectional fibers are provided by building up the preform from a plurality of dry unidirectional tapes. The layers of the preform are preferably stitched together. Fabric-reinforced composite materials may be prepared by molding such a preform and infusing the preform in the mold with a thermosetting resin in a liquid-molding process.

The lamina of unidirectional fibers in the multiaxial fabric may be laid-down in quasi-isotropic or orthotropic patterns. The pattern may be repeated as needed to achieve a desired thickness of the finished part. The repeated pattern may be constant or may be varied across the preform. Where the repeated pattern is varied across the preform, the locally different thicknesses may be mechanically held in place, such as by stitching, tufting, or heating to melt-bond the multilayers together. Alternatively, a localized "tackifier", such as are known in the trade, may be used for holding preform pieces in place mechanically.

Conventional methods for manufacturing large-scale preform materials may be modified to produce multiaxial fabrics containing reinforcing layers of unidirectional fibers with non-woven interlayers disposed between the reinforcing layers and melt-bonded to at least one of them. In one method, a plurality of tows is first pulled across a set of pins to create reinforcing layers of unidirectional fibers. An interlayer material is introduced to reside between the reinforcing layers, and the layers of unidirectional fibers are knitted together to form a multilayer stack. The interlayer material may be attached to individual reinforcing layers via heating without causing all layers to be melt-bonded to each other.

Fiber-reinforced composite materials may be made by molding a preform and infusing the preform with a thermosetting resin in a number of liquid-molding processes. Liquid-molding processes that may be used in the invention include, without limitation, vacuum-assisted resin transfer molding (VARTM), in which resin is infused into the preform using a vacuum-generated pressure differential. Another method is resin transfer molding (RTM), wherein resin is infused under pressure into the preform in a closed mold. A third method is resin film infusion (RFI), wherein a semi-solid resin is placed underneath or on top of the preform, appropriate tooling is located on the part, the part is bagged and then placed in an autoclave to melt and infuse the resin into the preform. The RFI method is described in U.S. Patent No. 4,311,661, the disclosure of which is incorporated by reference.

### BRIEF DESCRIPTION OF THE DRAWINGS

The present disclosure will become more fully understood from the detailed description and the accompanying drawings, wherein:

FIG. 1 is a schematic side view one embodiment of thermoplastic fibers;

FIG. 2 illustrates a stitched preform;

FIG. 3 illustrates a process for preparing a unidirectional dry tape; and

FIG. 4 illustrates a process for producing a preform.

FIG. 5 is a diagrammatic view showing part of the making and widening of a coherent unidirectional sheet that is made up of discontinuous fibers;

FIGS. 6A and 6B are a highly diagrammatic overall plan view of a laying machine for making multiaxial fiber sheets in an implementation of the present disclosure;

FIG. 7 is a diagrammatic elevation view showing a detail of the device for putting local reinforcing films into place in the machine of FIGS. 6A to 6B;

FIGS. 8A to 8C show the successive steps of putting the reinforcing film into place using the FIG. 7 device;

FIG. 9 is a diagrammatic view in lateral elevation showing a detail of the device in the machine of FIGS. 6A to 6B for cutting the transverse unidirectional sheet into segments and for fixing a cutoff segment;

FIG. 10 is a diagrammatic end elevation view of the cutting and fixing device of FIG. 9;

FIGS. 11A to 11C show the successive steps of fetching, cutting, and fixing a segment of transverse unidirectional sheet in the machine of FIGS. 6A to 6B;

FIG. 12 is highly diagrammatic and shows part of a variant embodiment of the laying machine of FIGS. 6A to 6B;

FIGS. 13A to 13D show the successive steps of fetching, cutting, and fixing a segment of a transverse unidirectional sheet in another variant embodiment of the laying machine of FIGS. 6A to 6B;

FIG. 14 is highly diagrammatic and shows a variant implementation of the fixing of segments of transverse unidirectional sheet in a laying machine such as that of FIGS. 6A-6B;

FIG. 15 is highly diagrammatic and shows a variant implementation of laying transverse unidirectional sheets;

FIG. 16 is highly diagrammatic and shows a variant implementation of laying in which the transverse unidirectional sheets overlap partially; and

FIGS. 17, 18, and 19 are highly diagrammatic and show first, second, and third variant embodiments of the means for bonding together the superposed unidirectional sheets in a laying machine.

### DETAILED DESCRIPTION

The following description of various embodiments is merely exemplary in nature and is in no way intended to limit the present disclosure, its application, or uses.

In a first aspect of the disclosure, a multiaxial fabric is prepared that is made of alternating layers of reinforcing unidirectional fibers and non-woven interlayers. The non-woven interlayers comprise a spunbonded, spunlaced, or mesh fabric of thermoplastic fibers. The interlayers are disposed between and knit-stitched to the reinforcing layers. In one embodiment the thermoplastic interlayers are melt-bonded to at least one of reinforcing unidirectional fabric layers. Such multiaxial fabrics may be manufactured by a number of processes to produce preforms that are 12"-300" (38.48 cm - 762 cm) wide.

In another aspect, fiber reinforced composite materials are made by molding a multiaxial preform such as described above, and infusing the preform with a thermosetting resin in a liquid-molding process. After infusion of the preform, the component is heated in the mold to gel and set the resin.

In one preferred embodiment, the unidirectional fibers are made of carbon fibers. Other examples of unidirectional fibers include, without limitation, glass fibers and mineral fibers. Such layers of unidirectional fibers are usually prepared by a laminating process in which unidirectional carbon fibers are taken from a creel containing multiple spools of fiber that are spread to the desired width and then melt-bonded to a thermoplastic interlayer, as described above, under heat and pressure.

The interlayer is made of a spunbonded, spunlaced, or mesh fabric of thermoplastic fibers. The thermoplastic fibers may be selected from among any type of fiber that is compatible with the thermosetting resin used to form the fiber reinforced composite material. For example, the thermoplastic fibers of the interlayer may be selected from the group consisting of polyamide, polyimide, polyamide-imide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate and polyethylene terephthalate.

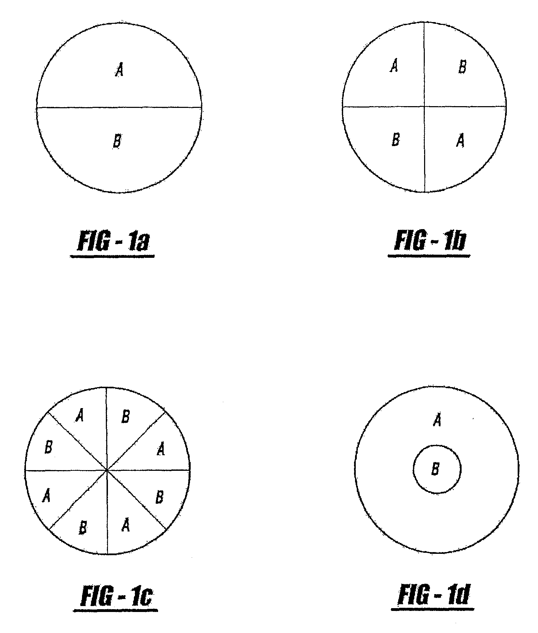

In an embodiment the thermoplastic fibers are made from two or more materials. For example, the two or more materials may be prepared by mechanically mixing different fibers, which are used to create the spunbonded, spunlaced, or mesh fabric. The two or more materials may be used to form a bi-component fiber, tri-component fiber or higher component fiber to create the interlayer fabric. Non-limiting examples of bi-component fibers are illustrated schematically in FIG. 1. FIG. 1(a) shows in cross-section a fiber made for example by coextrusion of a fiber material A and a fiber material B. Such a fiber may be produced by a spinneret with two outlets. FIG. 1(b) shows a bi-component fiber made from materials A and B such as would be produced by extrusion through four spinnerets. Similarly, FIG. 1(c) shows a bi-component fiber spun from eight spinnerets. In a preferred embodiment, the bi-component fiber is used in the form of a core sheath fiber such as illustrated in FIG. 1(d). In a core sheath fiber, a fiber material of one type, illustrated as B in FIG. 1(d) is extruded as the core, while a fiber material of another type, illustrated as A in FIG. 1(d) is extruded as the sheath.

Bi-component fibers such as illustrated in FIG. 1 and other fibers containing more than two components, can be made by a number of conventional procedures. Additionally, although the fibers in FIG. 1 are illustrated schematically with circular cross-sections, it is to be appreciated that other cross-sections may be used.

The interlayer material may be made of bi-component fibers containing a sheath of one material and a core of another. In a particular embodiment, the sheath made of a polyurethane and the core may be made of a polyamide.

The fibers making up the interlayer may have diameters from about 1 to 100 microns, and more preferably from 10 to 75 microns, and still more preferably from 10 to 30 microns. The thermoplastic fibers may have diameters from about 1 to 15 microns.

The interlayer material may have a wide range of areal densities. The areal density may be chosen according to the amount required to impart the desired impact resistance, as verified for example by compression-after-impact testing according to Boeing test method BSS 7260. The desired impact-resistance level is determined on a part-by-part basis assuming specific impact-energy levels. In one embodiment, the interlayer material has a areal density of 1-50 grams/square meter. In another embodiment, the areal density of the interlayer is about 2-15 grams/square meter.

The interlayer material may be a spunbonded fabric. Spunbonded fabrics are produced from continuous fibers that are continuously spun and bonded thermally. These fabrics are commercially available from a wide variety of sources, primarily for the clothing industry. Preferred fabrics have areal weights that are generally lower than those of fabrics used in clothing.

In another embodiment, the interlayer is a spunlaced fabric. Spunlaced fabrics are prepared from continuous fibers that are continuously spun and bonded mechanically. These fabrics are commercially available from a wide variety of sources, primarily for the clothing industry. As for the spunbonded fabrics, preferred spunlaced fabrics have areal weights that are generally lower than those commonly used in the clothing industry.

In another embodiment, the interlayer comprises a mesh fabric. The mesh construction may contain between 0.5 and 15 threads per inch in the warp and weft directions.

The multiaxial preform comprises a plurality of reinforcing layers with interlayers disposed between the reinforcing layers and melt-bonded to at least one of the reinforcing layers. It is preferred to use multiaxial preforms having 4 or more reinforcing layers of unidirectional fabrics. In another embodiment, the preform has from 2-16 layers of unidirectional fabrics.

The lamina may be laid-down in a quasi-isotropic pattern. A quasi-isotropic pattern is one that approximates an isotropic material in the plane of the fibers. This is also known as transverse isotropy. For example it is possible to lay-down lamina in a quasi-isotropic 0/+45/90/-45 pattern. To illustrate, other quasi-isotropic patterns include +45/0/-45/-90 and - 45/0/+45/90. Another quasi-isotropic pattern is 0/+60/-60.

In another embodiment, the lamina may be laid-down in an orthotropic pattern. Orthotropic means having fibers or units such that the net result is not quasi-isotropic in plane like the quasi-isotropic patterns just described. An example of an orthotropic pattern is one with 44% 0°, 22% +45°, 22% -45° and 12% 90° fibers. In this example, greater longitudinal strength (along the 0°-direction) and lower shear strength (±45°-direction) and transverse strength (90°-direction) than a quasi-isotropic (25/50/25) lay-up are achieved. The resulting built-up lamina provide higher strength and thickness in the 0° direction as compared to a quasi-isotropic laminate, but provide lower shear strength and thickness (provided by the ±45° layers). Correspondingly, in the example, the 90° strength is lower than a quasi-tropic laminate. The term orthotropic is well understood in the field. For example a 0° fabric is orthotropic, as well as any other pattern that does not result in balanced average in plane (i.e. quasi-isotropic) properties.

As noted above, it is common to prepare the laminae in sets of four. Where desired, the pattern of four laminae may be repeated to achieve a desired thickness. When it is desired to build-up a desired thickness, mirror-image lamina stacks may be used to prevent post-cure bending and twisting due to thermal stresses created after curing the resin at elevated temperature. In such a case, the total lay-up would be made up of groups of balanced laminae, or laid-up alternately to balance the laminate. This practice is common in the field and is done to ensure the fabrication of flat parts and to avoid potential inconsistencies involving parts with unknown and/or temperature-sensitive configurations.

The interlayers made of thermoplastic fibers may be melt-bonded to the unidirectional fiber layers between which they are disposed. Such melt-bonding acts to maintain the orientation of the unidirectional fibers in place during resin infusion into the mold during a (subsequent) liquid-molding process. In addition, the multiaxial preform may be knitted or sewed together with thread to hold the fabric layers together during resin infusion and cure. In another embodiment, a warp-knit, multiaxial fabric may be assembled by knit-stitching the reinforcing layers together with thermoplastic interlayers between the reinforcing layers. The knit thread or sewing thread may be selected from a variety of materials, including without limitation, polyester-polyarylate (*e.g.* Vectran®), polyaramid (*e.g.* Kevlar®)), polybenzoxazole (*e.g*. Zylon®)), viscose (*e.g.* Rayon®)), acrylic, polyamide, carbon, and fiberglass). Where desired, the knitting or sewing step is carried out after the initial lay-up of the multiaxial preform. The same kinds of threads may be used to hold locally different thicknesses mechanically in place by stitching and by tufting, as discussed above.

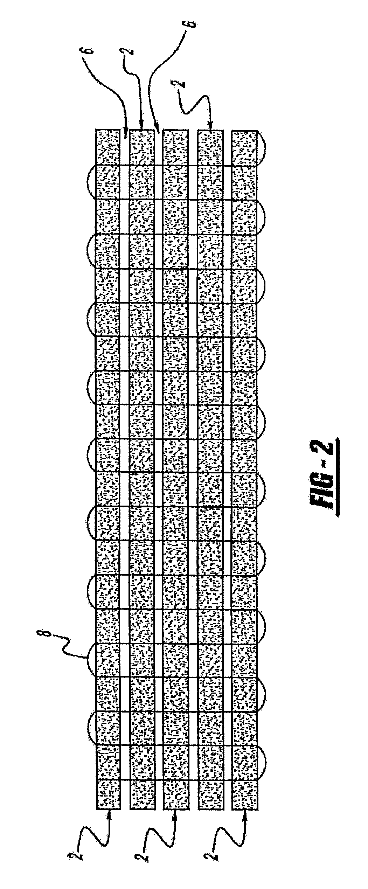

FIG. 2 shows an embodiment of a multiaxial preform for a composite material for use in a liquid-molding process of the invention. In FIG. 2, interlayers 6 made of thermoplastic fibers are disposed between reinforcing fabric layers 2 of unidirectional fabrics. At least some of the interlayers are melt-bonded to an adjacent reinforcing fabric layer. A sewing thread 8 may be used to hold the preform layers together.

In another embodiment a multiaxial warp knit fabric is provided where the thermoplastic interlayer is melt-bonded only to the 0-degree layers, with the non-0-degree layers and other interlayers attached to the 0-degree layer using a knit thread. In this example only the 0-degree layer is melt-bonded. To illustrate, an example lay-up is thermoplastic (TP) interlayer not melt-bonded/+45° fibers/TP interlayer melt-bonded to top of 0° layer/0° fibers/TP interlayer melt-bonded to bottom of 0° layer/-45° fibers/TP interlayer not melt-bonded/90° fibers with the whole assembly knitted together.

The 0-degree layer is generally used as the primary load carrying direction. By stabilizing the 0-degree layer by melt-bonding a thermoplastic interlayer, the strength of the resulting molded part is increased without having to melt-bond the other directions. Although in this embodiment the other directions are not necessarily strengthened as much as the 0-degree layer, the other layers will generally contribute to greater impact resistance of the molded part due to the presence of non-bonded interlayer material.

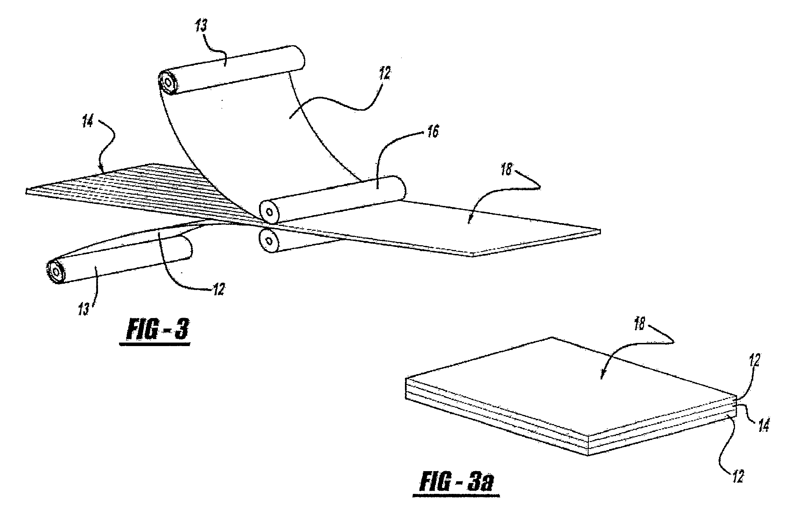

In another embodiment an interlayer material may be melt-bonded to one or both sides of a unidirectional dry fabric to produce a dry unidirectional tape. FIG. 3 illustrates such a process. A veil 12 made of the interlayer material is fed from rollers 13 and laminated to a unidirectional dry fabric 14. The veil 12 is melt bonded to the fabric 14, for example by passing between heated rollers 16, to produce a fabric 18 having a veil material melt bonded to the unidirectional fibers. The fabric 18 may be provided in the form of a dry unidirectional tape. FIG. 3a shows a detail of the construction of a fabric 18 with interlayer material 12 melt bonded to both sides of the unidirectional dry fabric 14. In an alternative embodiment, the veil material 12 may be melt-bonded to only one side of the unidirectional fibers 14. However, it is preferred to melt-bond the interlayer material on both sides of the unidirectional dry fabric to produce a tape with easier handleability.

In an exemplary embodiment, the interlayer material is strongly bonded to the unidirectional dry fabric. In a non-limiting example, there is a high degree of melt bonding of the thermoplastic fibers of the interlayer to the unidirectional fabric. To obtain a high degree of melt bonding, preferably more than 30% by weight of the fibers in the interlayer are made of a polymeric material having a melting temperature below the temperature at which melt bonding is carried out, so that more than 30% of the fibers are melt bonded during the process. In other embodiments of a high degree of melt bonding, more than 40%, and especially more than 50%, of the fibers are melted during the melt bonding. In a further illustration, more than 50%, more than 60% or more than 75% by weight of the thermoplastic fibers in the interlayer are made of a polymeric material having a melting temperature below the temperature at which melt bonding (for example, carried out by using heated rollers as described further below) is carried out, in order to obtain a high degree of melt bonding.

In various embodiments, over 90% by weight or essentially all of the fibers of the interlayer material are made of a material that melts below the temperature at which the heat bonding is carried out. In one embodiment, as close to 100% of the fibers as possible are melt bonded to the unidirectional dry fabric, as long as the material is not calendared or smeared by the melt bonding process. Suitable melt bonding parameters are selected in order to obtain the desired high level of bonding while avoiding undesired calendaring or smearing of the interlayer.

The dry unidirectional tape 18 may be used to assemble a multiaxial preform in a continuous process, such as disclosed in U.S. Patent No. 6,585,842 (equivalent to EP0972102/WO9844183) by Hexcel, the disclosure of which is hereby incorporated by reference. In a process described in the Hexcel patent, unidirectional dry tapes are introduced along a moving bed to produce a multiaxial lay-up. The Hexcel patent describes a method wherein several unidirectional webs are stacked in different directions and mutually linked. At least one of the unidirectional webs is provided with cohesion for manipulation before being stacked with the other web. In the Hexcel patent, cohesion is provided for example by physical entanglement, chemical adhesives, or by providing the web with stitch filaments that may be melted with heat to provide cohesion between the fibers of the unidirectional webs.

In one aspect, the present disclosure provides unidirectional webs with good cohesion for manipulation before being stacked. The cohesion is provided by a spunlaced, spunbonded or mesh fabric melt-bonded to a layer of unidirectional fibers. Dry unidirectional tapes may be prepared by the process illustrated in FIG. 3.

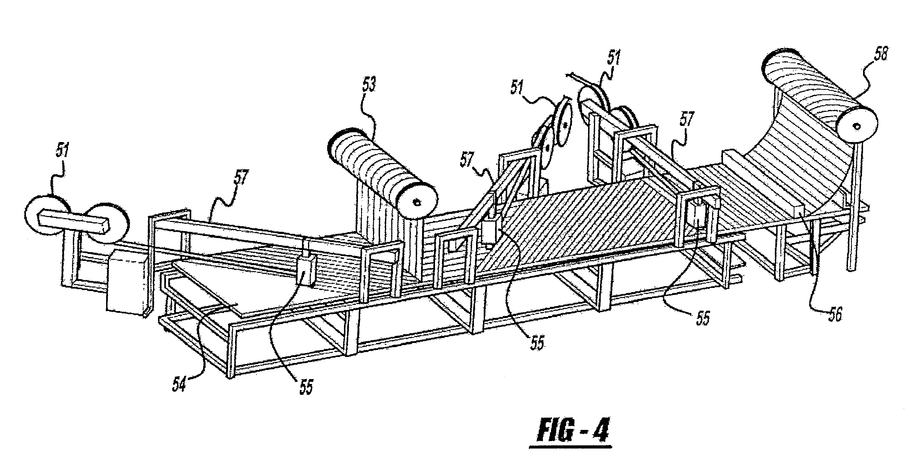

A process for making a preform is schematically illustrated in FIG. 4. In the method of FIG. 4, unidirectional tapes are provided on unidirectional tape rolls 51 and on longitudinal roll 53. Longitudinal roll 53 may hold a plurality of rolls of unidirectional fabric to achieve a desired width. Tape rolls 51 are associated with lay-up devices 57 and tape delivery heads 55 that lay down four plies of fabric on a moving conveyor 54. The lay-up devices are disposed at a plurality of angles relative to the warp direction, corresponding to the desired pattern of buildup of the four-layer preform material. After all four layers are laid down the fabric passes through a knitting unit 56 and is taken up on take-up spool 58.

The Hexcel patent incorporated by reference provides a laying machine for making a multiaxial fiber sheet by superposing unidirectional fiber sheets in different directions, the machine comprising:
apparatus for advancing the multiaxial sheet, the apparatus comprising support means for supporting the multiaxial sheet that is being made and drive means for driving the support means in a direction of advance;
feed means for feeding longitudinal unidirectional sheet in a direction parallel to the direction of advance;
a plurality of cross-laying devices each including feed means for feeding the cross-laying device with continuous unidirectional sheet, a moving grasping head for taking hold of the free end of a sheet, and means for laying successive segments of sheet parallel to a transverse direction at a selected angle relative to the direction of advance, said laying means comprising means for driving the grasping head; and
bonding means for bonding the superposed unidirectional sheets together, the bonding means being located downstream from the support means in the direction of advance, in which machine:
   each cross-laying device includes cutter means; and
means are provided for performing successive cycles comprising, for each cross-laying device, grasping the free end of a unidirectional sheet by means of the grasping head, moving the grasping head to fetch a segment of unidirectional sheet, cutting off the fetched segment of unidirectional sheet, and laying the cutoff segment of unidirectional sheet on the support means.

An advantage of such a machine lies in the possibility of laying unidirectional sheets of relatively broad width, including in the transverse directions.

Superposed unidirectional sheets can be bonded together in various ways, e.g. by sewing, by knitting, by needling, or by adhesive, e.g. by spraying an adhesive agent or by inserting a heat-fusible or thermo-adhesive film or thread between the sheets. A bonding agent that may possibly have been used for providing cohesion within unidirectional sheets can be reactivated to bond the sheets to one another.

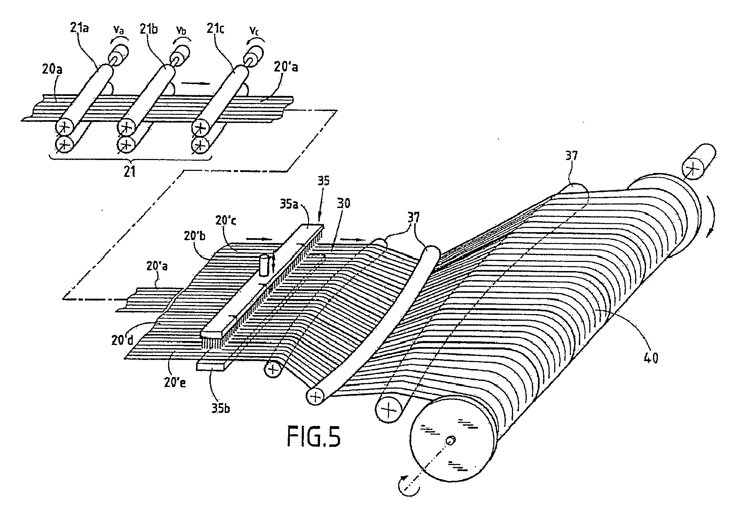

Advantageously, the operation of forming a unidirectional sheet or strip made up of discontinuous filaments includes spreading a tow of continuous filaments so as to obtain a sheet 20a of continuous filaments. This is taken to a stretching and bursting device 21 (FIG. 5). The stretching and bursting technique is well known per se. It consists in causing the sheet to pass between several successive pairs of drive rolls, e.g. 21a, 21b, and 21c, which are driven at respective speeds Vₐ, V_{b}, and V_{c} such that V_{c} >V_{b} >Vₐ. By drawing the sheet at increasing speeds, the continuous filaments are broken. The distance between the pairs of rolls, and in particular between 21a and 21 b determines the bursting pattern, i.e. it determines the mean length of the burst filaments.

After stretching and bursting, the sheet 20'a is stretched; however its weight (per unit area) is significantly reduced compared with that of the sheet 20a. The stretched sheet 20'a made up of discontinuous filaments is optionally juxtaposed side by side with or partially overlapping other similar sheets 20'b to 20'e, and is then made coherent by the above-described moderate matting means, e.g. by being subjected to a jet of water under pressure or to needling by a needling device 35.

The resulting sheet 30 can be widened so as to further reduce its weight (per unit area), without the sheet losing its cohesion. This ability of being widened is given by the cohesion technique used (water jet or needling).

Widening can be performed, for example, by causing the coherent sheet 30 to pass over one or more pairs of curved rolls 37 prior to being stored on the reel 40.

It will be observed that the sheet can be widened after it has been stored on the reel 40, e.g. when it is taken from the storage reel in order to form a multiaxial sheet.

Other known techniques for obtaining unidirectional sheets by spreading tows can also be used, for example the techniques described in Rhone Poulenc Fibres documents FR-A-2 581 085 and FR-A-2 581 086, which are both hereby incorporated by reference into the present application. In these documents, a tow for spreading is taken to rolls which include resilient elongate elements at their peripheries that are disposed along generator lines and that are provided with spikes. For the portion of its path where it is in contact with a roll, the tow is engaged on the spikes and it is spread by the elastic elements extending parallel to the axis of the roll.

### Making a Multiaxial Sheet

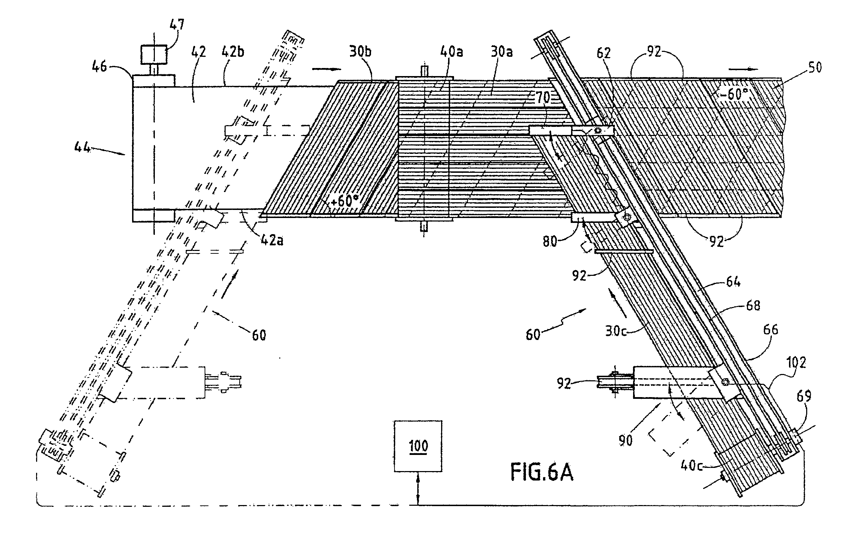

Reference is now made to FIGS. 6A-6B which show a laying machine constituting an embodiment of the present disclosure suitable for making a continuous multiaxial sheet from a plurality of unidirectional sheets, at least one of which can be obtained by a method as described above.

In the example shown, a multiaxial sheet 50 is made up of three unidirectional sheets 30a, 30b, and 30c making the following angles respectively with the longitudinal direction: 0°, +60°, and -60°. The sheet at 0° (sheet 30a), i.e. the "main" sheet, is a coherent unidirectional sheet as obtained by the above-described method, unreeled from a reel 40a. The transverse sheets at +60° (sheet 30b) and at -60° (sheet 30c) are unidirectional sheets which can also be coherent sheets obtained by the above-described method and which are unreeled from respective reels 40b and 40c. The unidirectional sheets used need not necessarily have the same width. Thus, in the example, the transverse sheets 30b and 30c both have the same width which is smaller than that of the longitudinal sheet 30a. In general, the transverse sheets will normally be of a width that is smaller than that of the main sheet (0°).

It will be observed that the angles formed by the transverse sheets relative to the sheet at 0° can be other than +60° and -60°, for example they can be +45° or -45°, or more generally they can be angles that are preferably of opposite sign, but that are not necessarily equal. It will also be observed that more than two transverse sheets can be superposed with the 0° sheet, e.g. by adding a sheet at 90° and/or by adding at least one other pair of sheets forming opposite angles relative to the longitudinal direction.

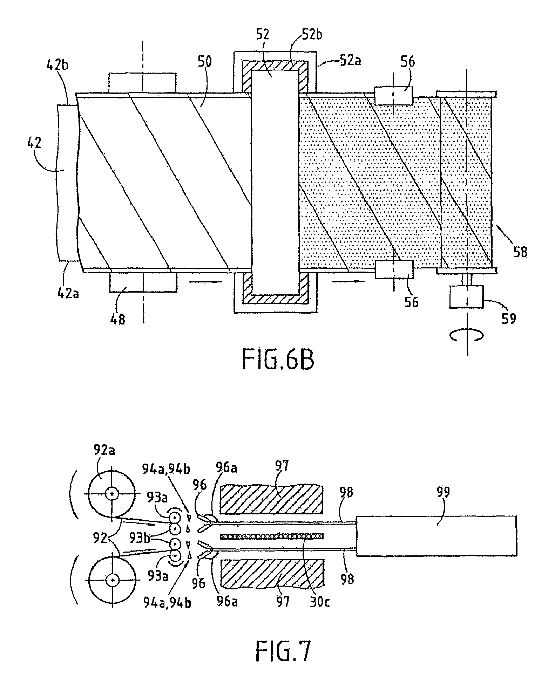

As shown in FIG. 6A, the multiaxial sheet 50 is formed on a support constituted by a horizontal top segment of an endless belt 42 of a conveyor 44 passing over a drive roll 46 driven by a motor 47, and over a deflection roll 48 (FIG. 6B). It will be observed that the width of the belt 42 is narrower than that of the sheet 50 so that the sheet projects slightly from both sides 42a and 42b of the belt 42.

The sheet may be made by fetching juxtaposed segments 30b at +60° onto the belt 42 and then depositing the sheet 30a that is oriented at 0° thereon, and then bringing over that juxtaposed segments of the sheet 30c oriented at -60°. It is an advantageous feature to be able to make a multiaxial sheet 50 in which the 0° sheet is situated between the transverse sheets, thereby conferring a symmetrical nature to the sheet 50. This is made possible by the cohesion intrinsic to the sheet 30a.

Also advantageously, the unidirectional sheet at 0°, as obtained by a method as described above, is of relatively great width, not less than 5 cm, and preferably at least 10 cm, thus making it possible to make multiaxial sheets of substantial width.

The devices 60 for fetching, cutting, and laying successive segments of the sheets 30b and 30c are identical, so only the device associated with the sheet 30c is described.

The sheet 30c is unreeled from the reel 40c by means of a grasping head 70 having at least one clamp capable of taking hold of the free end of the sheet 30c.

The sheet 30c is pulled from an edge 42a of the conveyor belt 42 over a length that is sufficient to cover the width of the longitudinal sheet. The segment thus fetched is cut off in the longitudinal direction at the edge of the sheet 30a which is situated over the edge 42a of the conveyor belt by means of a cutter device 80. Simultaneously, the cutoff segment of sheet 30c is fixed by means of its end which has just been cut so as to conserve its position on the conveyor belt relative to the previously fetched segment, and thus relative to the sheets 30a and 30b which have already been laid.

In order to cut the sheet 30c without deformation or fraying, local reinforcement in the form of a segment of film or tape 92 is fixed on each face of the sheet 30c at each location where it is to be cut. The film 92 can be fixed, for example, by adhesive, by thermo-adhesive, by high frequency welding, by ultrasound welding, ... by means of a device 90. For example, a polyethylene film is used that can be fixed by thermo-adhesion. It will be observed that a reinforcing film could be fixed over one face only of the sheet 30c.

The grasping head 70 is carried by a block 62 which slides in a slideway 64 of a beam 66. By way of example, the block 62 is fixed on an endless cable 68 driven in the slideway 64 by a reversible motor 69. The beam 66 supports the reel 40c, and also the devices 80 and 90 for cutting off and laying segments of the sheet, and for putting reinforcing film into place.

A detailed description of how the head 70 and the devices 80 and 90 may be implemented is given below. It will be observed that the grasping head can be swivel mounted relative to the block 62 as can the devices 80 and 90 relative to the beam 66. As a result, the angle made by the deposited transverse sheet relative to the longitudinal direction (0°) can easily be modified by appropriately adjusting the orientation of the beam 66 and by adjusting the positions of the head 60 and of the devices 80 and 90 relative to the beam. Operation of the head 70 and of the devices 80, 90 is controlled by a control unit 100 to which they are connected by a bundle of cables 102 running along the beam 66.

A segment of each sheet 30b and 30c is fetched, cut off, laid, and fixed while the conveyor 44 is stationary. Thereafter, the conveyor is caused to advance over a length equal to the size of the sheets 30b and 30c as measured in the longitudinal direction (0°), and the process is repeated. On each advance of the conveyor 44, the same length of the longitudinal sheet is unreeled.

After being superposed, the sheets 30a, 30b, and 30c are bonded together. In the example shown in FIG. 6B, this bonding is performed by needling by means of a needle board 52 which extends across the entire width of the multiaxial sheet 50, as it leaves the conveyor 44. During needling, the sheet 50 is supported by a plate 52a carrying a base felt 52b, e.g. made of polypropylene, into which the needles can penetrate without being damaged. Needling is then performed each time the conveyor advances. Bonding by needling is particularly suitable for sheets made of discontinuous filaments or of continuous filaments that are not liable to be negatively affected by the needling.

A discontinuous web of fibers can be applied to the multiaxial sheet immediately prior to needling, so as to supply discontinuous fibers suitable for being taken by the needles so as to be introduced transversely into the multiaxial sheet, thereby bonding it.

After needling, the marginal zones of the multiaxial sheet 50, carrying portions of the reinforcing film 92 can be eliminated by being cut off by means of rotary cutter wheels 56 situated on both sides of the sheet. The resulting multiaxial sheet can be stored on a reel 58 driven by a motor 59, synchronously with the intermittent advance of the conveyor 44.

Reference is now made to FIG. 7 which shows in highly diagrammatic manner, greater detail of the device 90 for putting reinforcing films 92 into place by thermo-adhesion.

Each film 92 is pulled from a respective storage reel 92a and passes between two reels 93a, 93b, one of which (e.g. 93a) is coupled to a drive motor (not shown) which may be common to both reels 93a. Two clamps 96 are opened and closed under the control of actuators 96a, and are fixed at the ends of rods 98 secured to the same cylinder of a pneumatic actuator 99. The two rods 98 extend respectively above and below the path of the sheet 30c as pulled from the reel 40c, and they are of a length that is longer than the width of the sheet.

Two heating presses 97 are disposed on either side of the path of the sheet 30c. Two blades 94a co-operating with backing blades 94b are disposed immediately downstream from the pairs of reels 93a, 93b so as to be able to section the films 92 under the control of actuators (not shown).

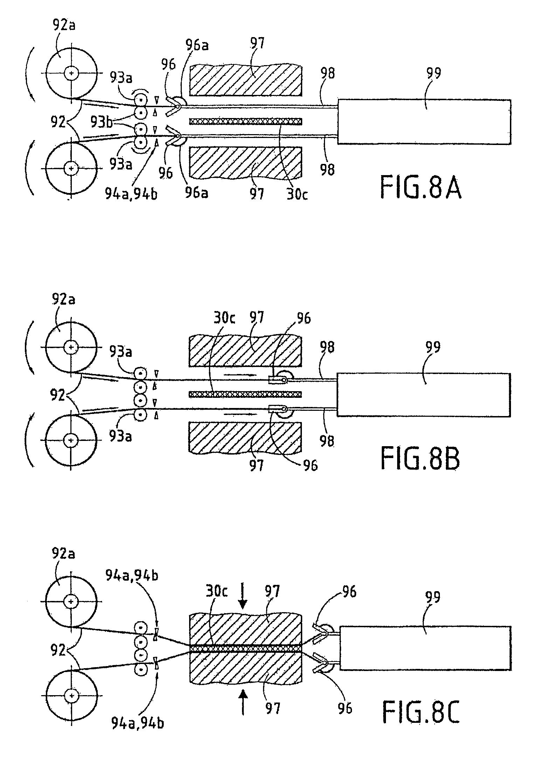

A cycle for putting the reinforcing films 92 into place comprises the following operations as illustrated in FIGS. 8A to 8C.

Starting with the rods 98 that carry the clamps 96 in their most advanced position, beyond the edge of the sheet 30c opposite from the edge adjacent to the actuator 99, the films 92 are advanced by means of the reels 93a, 93b until their free ends are fully engaged in the clamps 96 which are in the open position (FIG. 8A). The drive wheels 93a can be stopped either in response to detecting that the ends of the films 92 are home in the clamps 96 by using appropriate sensors, or else after the films have been advanced through a predetermined length.

The clamps 96 are closed under the control of actuators 96a, the reels 93a are declutched, and the actuator 99 is controlled to retract the rods 98 and to pull the films 92 to beyond the edge of the sheet 30c on the same side as the actuator 99 (FIG. 8B).

The heating presses 97 are applied on either side of the sheet 30c against the segments of film 92 that are situated on each face of said sheet so as to fix said segments by thermo-adhesion. As soon as the presses 97 have been applied, the clamps 96 are opened and the blades 94a are actuated so as to cut the films 92, thereby releasing the blade segments of film during thermo-adhesion (FIG. 8C).

After the presses 97 have been withdrawn and the sheet 30c has been advanced, the rods 98 are again brought into the advanced position by the actuator 99, and the film-laying cycle can then be repeated.

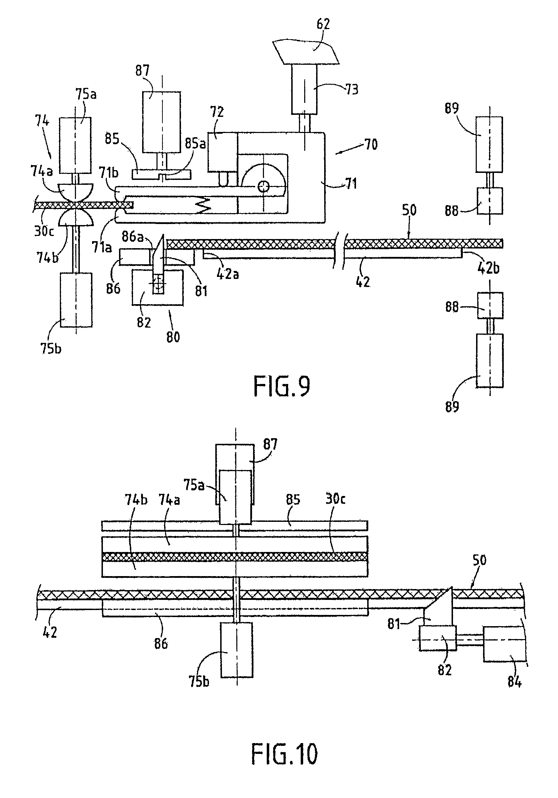

Reference is now made to FIGS. 9 and 10 which show in greater detail but in highly diagrammatic manner an embodiment of the grasping head 70 and the device 80 for cutting and fixing segments of the transverse sheet. The grasping head 70 may comprise a clamp 71 having two elements 71 a and 71 b for taking hold of the free end of the sheet 30c. Opening and closing of the clamp 71 are under the control of an actuator 72 which acts on the top element 71a. In addition, the clamp 71 is movable between a position in which it is close to the plane of the conveyor belt 42, and a position in which it is moved away from said plane under the control of another actuator 73 which is fixed to the block 62 and which supports the clamp 71.

In the vicinity of the edge 42a of the conveyor belt 42 situated on the side from which the sheet 30c is fetched, there is situated a guide device 74 in the form of a clamp. This clamp comprises a top element 74a that is movable under the control of an actuator 75a between a high position away from the plane of the conveyor belt 42 and a low position that is situated practically in said plane. The clamp 74 also has a bottom element 74b that is movable under the control of an actuator 75b between a low position situated practically in the plane of the conveyor belt 42 and a high position at a distance from said plane.

The cutting device 80 comprises a blade 81 mounted on a support 82 situated beneath the plane of the conveyor belt 42. The support 82 can slide along the edge 42a of the belt 42 under the control of an actuator 84. A presser device 85 is disposed above the plane of the conveyor belt 42 so as to press the sheet 30c onto a support 86 while a segment of the sheet is being cut off. The application of pressure and the withdrawal of the presser device 85 are controlled by an actuator 87. The support 87 and the presser device 85 have respective slots 85a and 85a for passing the blade 81.

The presser device 85 and the support 86 are also heater elements so as to constitute a heating press capable of clamping against the edges of the multiaxial sheet 50 that is being built up on the side 42a of the conveyor belt. A heating press made of two similar elements 88 under the control of actuators 89 can be provided on the opposite side 42b of the conveyor belt.

The width of the conveyor belt 42 is less than the width of the multiaxial sheet 50 being built up so as to leave the space required on the side 42a for the cutting device 80 and on the side 42b for optional heating presses 88.

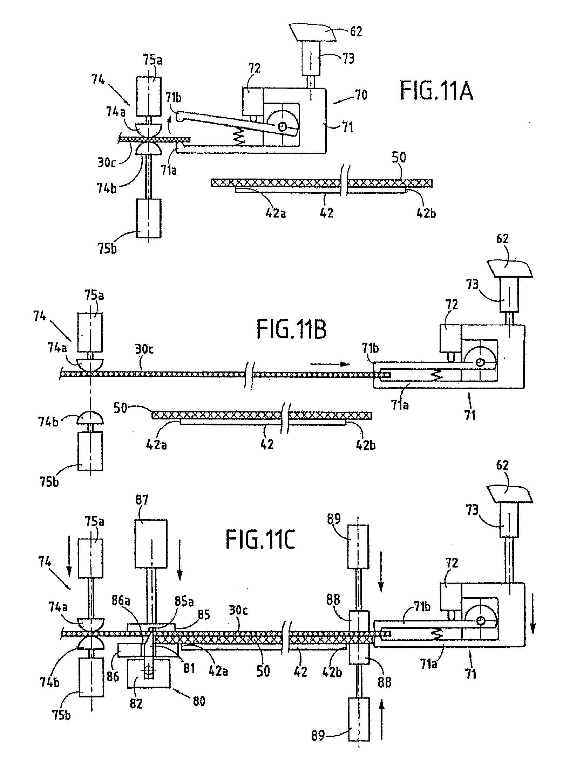

A cycle of fetching, cutting off, and fixing a segment of transverse sheet 30c comprises the following operations, as illustrated in FIGS. 11A to 11C.

The free end of the sheet 30c in the vicinity of the side 42a of the conveyor belt 42 is held by the clamp 74 with its elements 74a and 74b in the high position. The grasping head 70 has its clamp 71 in the high position and it is situated at the end of its stroke on the side 42a of the conveyor belt. In this position, the clamp 71 can be closed by the actuator 72 to take hold of the end of the sheet 30c (FIG. 11A).

The clamp 74 is opened by lowering its bottom element 74b, and the block 62 is moved by the motor 69 to bring the clamp 71 to the other end of its stroke, a little beyond the side 42b of the conveyor belt 42 (FIG. 11 B).

The clamp 71 is lowered as is the top element 74a of the clamp 74 so as to press the segment of sheet 30c against the conveyor belt 42 which is already supporting the sheets 30b and 30a. The presser device 85 is lowered by means of the actuator 87 so as to press the sheet 30c against the support 86. The blade 81 is then moved longitudinally so as to cut the sheet 30c (FIG. 1C). The sheet 30c is cut at the location where the reinforcing films 92 have been fixed, with the distance between the devices 80, 90 for laying the reinforcing films and for cutting the transverse sheet being equal to the transverse advance distance of the sheet 30c, i.e. to the length of the segment of sheet 30c to be cut off.

The heating elements 85 and 86 are controlled to produce the heat required for causing the cutoff portions of the reinforcing films 92 to adhere to the edge of the multiaxial sheet situated on the side 42a of the conveyor belt 42 so as to fix the position of the cutoff segment of sheet 30c on this side. The other film portions 92 which remain secured to the free end of the sheet 30c after cutting can be caused to adhere by means of the heating presses 88 to the other side of the multiaxial sheet 50. As a result, each cutoff segment of the sheet 30c is held in position relative to the remainder of the multiaxial sheet during formation thereof. This avoids any untimely displacement of the segments of the transverse sheet during the advances of the conveyor belt 42 prior to the multiaxial sheet being finally fixed.

The clamp 71 can then be opened and returned to its high position prior to being moved back towards the side 42a of the conveyor belt, while the clamp 74 is returned to its high position so as to present the free end of the sheet 30c in the desired position to the grasping head.

The above-described laying machine operates with discontinuous advance of the multiaxial sheet while it is being formed. In order to increase production throughput and improve compatibility with the operation of the means for bonding together the superposed unidirectional sheets when the bonding is performed by sewing or by knitting, it may be preferable to cause the laying machine to operate with advance that is continuous.

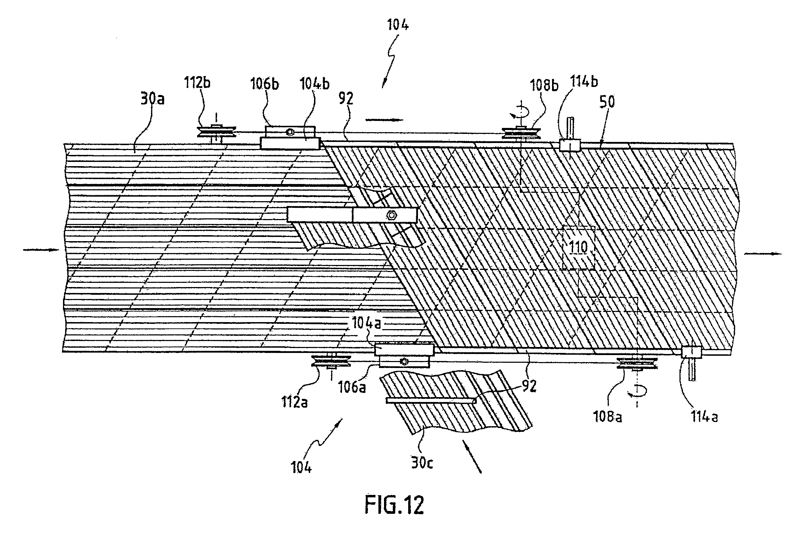

To this end (FIG. 12), the cutoff segments of transverse sheet are taken hold of by a transfer device 104 to be brought successively onto the multiaxial sheet 50 that is being formed and that is advancing continuously. The transfer device 104 has two pairs of clamps 104a, 104b carried by blocks 106a, 106b which are movable in translation parallel to the advance direction on either side of the conveyor belt 42. To this end, the blocks 106a and 106b are fixed on endless cables which pass over drive wheels 108a and 108b driven by a motor 110 and over two deflector wheels 112a and 112b. Two pairs of heating presser wheels 114a and 114b serve to fix a segment of transverse sheet by thermo-adhesive of the films 92 at the ends of the segments of sheet, as soon as it has been laid.

Each segment of transverse sheet is fetched and cut off by a cross-laying device 60 similar to the machine shown in FIGS. 6A-6B, except that the cutter device 80 is carried by the beam 66 and the heating presses for fixing the cutoff segments of sheet are not provided.

Laying is performed by fetching and cutting off each segment by means of the cross-laying device and by taking hold of the cutoff segment, as soon as it has been released by the cross-laying device by means of clamps 104a, 104b. These are moved synchronously by the motor 110 at a determined speed to bring the cutoff segment into contact with the previouslylaid segment and into the desired position (adjacent or with overlap). Thereafter the clamps 104a, 104b are returned to their initial position to transfer the following cutoff segment of sheet.

In another embodiment, and also for the purpose of increasing production throughput, each cross-laying device that fetches, cuts off, and lays successive segments of transverse sheet has a plurality of grasping heads that are moved along a path in a closed loop. As a result, while one grasping head is returning, another grasping head can be in action.

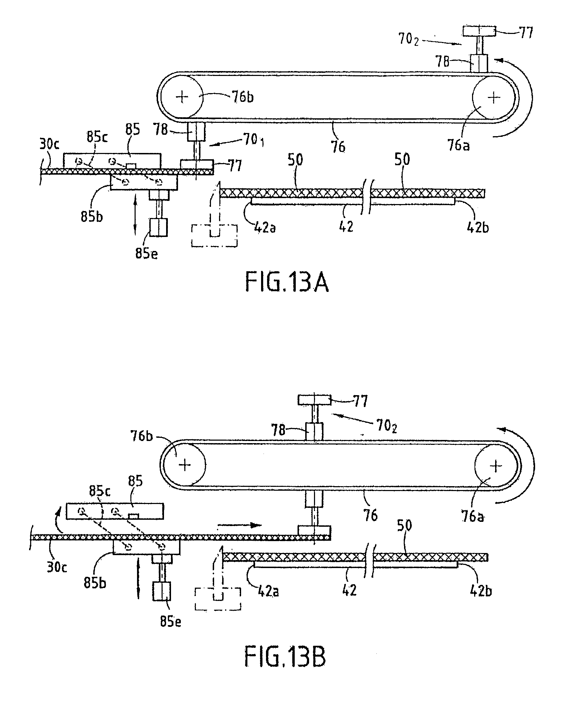

FIGS. 13A to 13D show the successive operations of fetching, cutting off, and fixing a segment of transverse sheet.

The cross-laying device differs from that of FIGS. 6A to 11C in that it has a plurality, e.g. two grasping heads 70₁ and 70₂ mounted on an endless transporter 76 using a belt or a chain. The transporter 76 has its bottom and top lengths extending above the conveyor belt 42, parallel thereto, and in the laying direction for the transverse sheet 30c that is to be laid. The transporter 76 passes over a drive wheel 76a and a return wheel 76b situated on opposite sides of the conveyor belt 42. The heads 70 are mounted at opposite locations on the transporter 76.

Each head 70.sub.1 and 70.sub.2 has a shoe 77 fixed at the end of an actuator 78. Connection between a grasping head and the free end of the sheet 30c is provided by means of adhesive sprayed onto the shoe 77 by an adhesive nozzle 79 situated above the top length of the transporter 76 in the vicinity of the end of the return path.

The cross-laying device of FIGS. 13A to 13D also differs from that of FIGS. 6A to 11C in that the presser device 85 is applied and withdrawn, not under the control of actuator means driven perpendicularly to the sheet, but by using a pivoting mount. The presser device 85 is connected to a support 85b by means of hinged links 85c. The hinged links 85c are driven by a motor member (not shown) to move the presser device 85 along a circular arc between a front position over the blade 81, and a rear position in which a passage for the grasping head is left clear. The support 85b is movable under drive of an actuator 85e between a raised position above the plane of the sheet 50 and a lowered position substantially level with the sheet 50. It will also be observed that the guide device 74 of FIGS. 9 to 11C is now superfluous. Operation is as follows.

Starting with the support 85b in the high position and the presser device 85 in the rear position, a grasping head 70₁ on which adhesive has been sprayed comes into contact with the free end of the sheet 30c (FIG. 13A).

The presser device 85 is raised by means of the links 85c and the transporter 76 is driven so that the free end of the sheet 30c is taken towards the side 42b of the conveyor belt 42, over the sheet 50 (FIG. 13B).

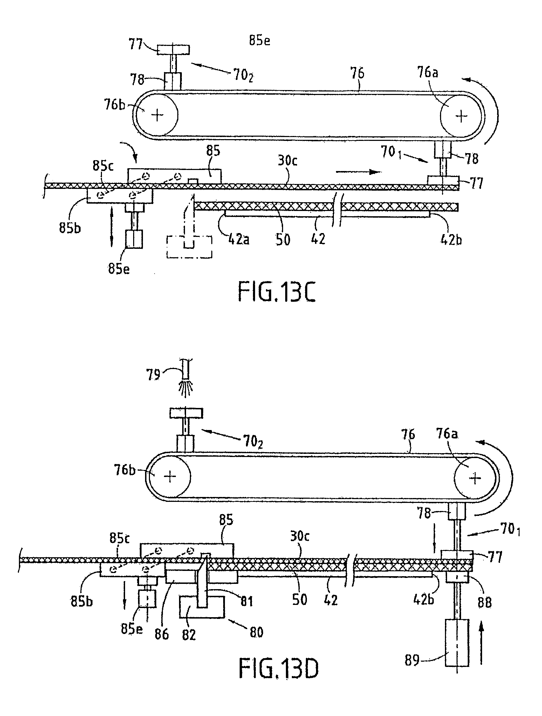

When the free end of the sheet 30c has come into position, the transporter 76 is stopped, the presser device 85 is tilted into its forward position, thereby holding the sheet 30c in the tensioned state between the grasping head 70, and the presser device 85 (FIG. 13C).

Thereafter, the actuator 85e and the actuator 78 of the head 70 are controlled to press the sheet 30c onto the sheet 50 (FIG. 13D). The segment is then cut off by means of the blade 81 passing through the slot 85a. Simultaneously, the edges of the cutoff segment are caused to adhere by means of the presser device 85 and the support 86 constituting a heating press and by pressure from the head 701 on the heating element 88. It will be observed that a single heating element 88 is provided, unlike the embodiment of FIG. 9. At the same time, adhesive is sprayed onto the head 70₂ by means of the nozzle 79. Thereafter, the head 70₁ is raised and then the transporter 76 is again driven so that a new laying cycle can start using the head 70₂.

In the above, provision is made to fix the ends of the transverse sheet segments temporarily by thermo-adhesive along one or both longitudinal edges of the multiaxial sheet, with the marginal portions thereof subsequently being eliminated.

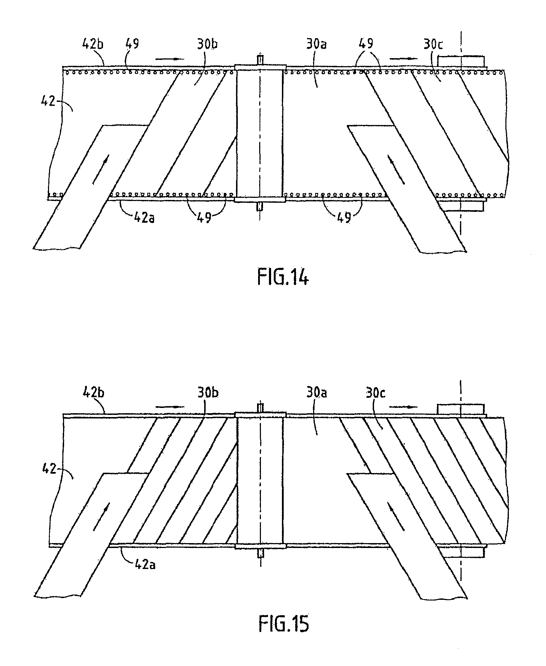

In another embodiment, temporary fixing of the transverse sheet segments can be provided by means of two longitudinal rows of spikes 49 along the edges 42a, 42b of the conveyor belt (FIG. 14). The transverse sheet segments are engaged at their ends on the spikes 49 when they are pressed against the conveyor belt 42 by lowering the clamps 71, 74 or by means of the transfer device of FIG. 12.

In another embodiment, the successive segments of the transverse sheet can be placed not adjacent to one another, but with partial overlap (FIG. 15). The degree of overlap is adjusted by adjusting the speed of the conveyor 44 between two successive transverse sheet segments being brought into position. Such partial overlap makes it possible to avoid difficulties that can be encountered when placing transverse sheet segments edge to edge. Under such circumstances, lightweight transverse sheets are used as can be obtained after being spread as shown in FIG. 5.

Although the above-described method of laying transverse sheets by fetching successive segments constitutes a preferred implementation of the invention, the possibility of using other laying techniques, in particular when the transverse sheets are of relatively small width, is not excluded.

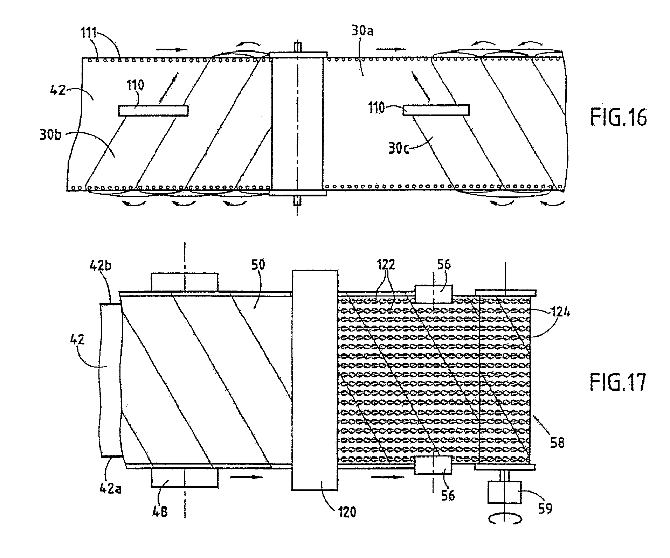

Thus, as shown very diagrammatically in FIG. 16, it is possible to use a technique of a type similar to that described in above-mentioned document U.S. Patent No. 4,677,831. In that technique, the ends of the transverse sheets 30b, 30c are fixed on cross-laying carriages 110 which are driven with reciprocating motion in translation parallel to the directions of the transverse sheet. The sheets 30b and 30c are unreeled from reels (not shown) optionally carried by the cross-laying carriages. At each end of the stroke of a cross-laying carriage, the transverse sheet is turned by passing over spikes 111 carried by the conveyor belt 42 along each of its longitudinal sides.

FIG. 6B shows superposed sheets being bonded together by needling. Other bonding methods can be used.

Thus, FIG. 17 shows bonding by stitching by means of a device 120 situated immediately downstream from the conveyor 44. The stitching can be performed using various different stitches, e.g. chain stitch 122, as is conventional. By way of example, the sewing thread 124 used can be a thread of polyester, glass, carbon, aramid, ... It is also possible to provide bonding by knitting, e.g. using a zigzag knitting stitch.

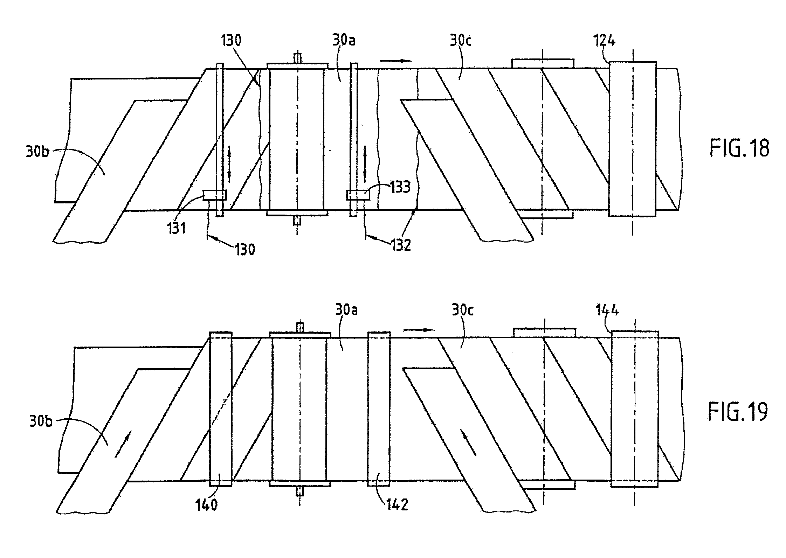

FIG. 18 shows bonding by means of heat-fusible threads which are introduced between the unidirectional sheets. A first heat-fusible thread 130 is placed on the sheet segments 30b by a cross-laying device 131 prior to the sheet 30a being laid, and a second heat-fusible thread 132 is placed on the sheet 30a by a cross-laying device 133 prior to the sheet segments 30c being laid. Immediately downstream from the conveyor 44, the multiaxial sheet 50 passes between two heater rolls 124 that cause the threads 130 and 132 to melt, thereby providing cohesion for the multiaxial sheet. By way of example, the threads 130 and 132 are glass threads coated in polypropylene. Instead of heat-fusible threads, it would be possible to use a heat-fusible film, or a thermo-adhesive film or thread.

Finally, FIG. 19 shows bonding by adhesive. Strips 140 and 142 for spraying adhesive agent are disposed across the conveyor belt 42 immediately downstream from the station for laying the unidirectional sheet 30a and the station for laying the unidirectional sheet 30c. Immediately downstream from the conveyor 44, the multiaxial sheet 50 passes between two rolls 144.

When cohesion of the unidirectional sheets is obtained by a heat-fusible or thermo-adhesive bonding agent, bonding between the unidirectional sheets can also be obtained by thermally reactivating the bonding agent.

The methods various and the machines for laying as described above serve to make multiaxial sheets comprising an arbitrary number of superposed sheets. Thus, it is possible to form a multiaxial sheet that does not have a longitudinal unidirectional sheet (0°) by placing at least two transverse unidirectional sheets. In this case, and preferably, the transverse sheets comprise at least one pair of sheets whose directions are at opposite angles relative to the longitudinal direction, optionally together with a transverse sheet at 90°. When a longitudinal unidirectional sheet is provided, as already mentioned, at least one pair of transverse sheets are placed on opposite faces of the longitudinal sheet and at opposite angles relative thereto; in this case also it is possible to add at least one transverse sheet at 90°.

The resulting multiaxial sheets can be used for making the reinforcement of composite material parts, e.g. by well-known techniques of draping or needling superposed plies. The resulting reinforcement is then densified by a matrix obtained by chemical vapor infiltration or by a liquid process (impregnating with a matrix precursor in the liquid state, e.g. resin, followed by transforming the precursor, e.g. by heat treatment), or indeed by califaction. With califaction, the preform is immersed in a liquid precursors of the matrix and the preform is heated, e.g. by contact with an inductor core or by direct coupling with an inductor coil, such that the precursor is vaporized on coming into contact with the preform and can infiltrate to form the matrix by being deposited within the pores of the preform.

Alternatively, a device such as described in Hagel, U.S. Patent No. 5,241,842 or Wunner, et al., U.S. Patent No. 6,276,174 (the disclosures of which are hereby incorporated by reference) may be used to prepare multiaxial preforms by providing tows of unidirectional carbon fibers. One or a plurality of tows is pulled across pins to create reinforcing layers of unidirectional fibers. In this embodiment, a means is provided for introducing the interlayer material between the layers of unidirectional carbon fibers. Because the interlayer material is non-directional, it need not be introduced at an angle in the way that the unidirectional carbon fibers are.

The multiaxial preforms of the present disclosure may be made into cured fiber-reinforced composite materials by a variety of liquid-molding processes. In one, vacuum-assisted resin transfer molding, a resin is introduced to a mold containing the multiaxial preform under vacuum. The resin infuses the preform and saturates the interlayers between the layers of unidirectional fibers. The interlayers are made of a material that is permeable to permit the flow of resin during the liquid-molding operation. Furthermore, the melt-bonded interlayers hold the unidirectional fibers in place during the resin infusion.

In another method, resin transfer molding, resin is infused under pressure into a closed mold. These and other liquid-molding processes may be used to prepare the cured fiber-reinforced composite material of the invention.

Following infusion of the resin in the mold in a process such as those described above, the mold is heated to cure the resin to produce the finished part. During heating, the resin reacts with itself to form crosslinks in the matrix of the composite material. After an initial period of heating, the resin gels. At gel, the resin no longer flows, but rather behaves as a solid. In a preferred embodiment, it is important to gel the resin at a temperature below the melting point of the thermoplastic fibers of the interlayer in order to prevent their melting and flowing into the reinforcement fiber bundles. After gel, the temperature or cure may be ramped up to a final temperature to complete the cure. The final cure temperature depends on the nature and properties of the thermosetting resin chosen. For the case of aerospacegrade epoxy resins, it is conventional to ramp the temperature after gel up to a temperature range of 325°F to 375°F and hold at this temperature for 1 to 6 hours to complete the cure.

A high degree of melt bonding of the interlayer to the unidirectional fabric is desirable, as it reduces the bulk factor of the fabric. The fabric is thus suitable for low-pressure-infusion processes like VARTM to give fiber-volume fractions equivalent to autoclave-processed materials without a debulking operation.

Insufficient or partial melt-bonding on the other hand tends to yield a high bulk factor and may not make the fabric acceptably stable as it moves along the lay-up apparatus before it is stitched, which does fix a large portion of the fibers. Moreover, full melt-bonding, or substantially full melt-bonding, of the fabric enables a significant reduction in the amount of knit stitching required to hold the multiple fabric layers together. The reduced stitching has multiple benefits: less "parasitic" weight from the knit threads; improved drapability vs. more stitching; and less negative impact to the fabric from holes created by knitting.

### Examples

The results shown below are for compression-after-impact (CAI) panels made and tested according to BMS 8-276 (a Boeing material specification for a toughened prepreg system used for commercial aircraft) using BSS 7260 Type II, Class 1 impact with an impact energy of 270 in-Ib.

Test panels were prepared as follows. The panel lay-up was (+45/0/-45/90)_{3S} using unidirectional fabric from Anchor Reinforcements (Huntington Beach, CA) to which spunbonded fabric had been melt-bonded. A control used only a thermoplastic weft fiber to hold the fabric together. The three spunbonded fabrics were supplied by Spunfab (Cuyahoga Falls, OH) in areal weights of 0.125, 0.250, and 0.375 oz/yd². The three materials used were PE2900, a polyester; VI6010, a ternary polymer blend; and PA1008, a polyamide.

A dry, uni-directional tape 13 inches in width was prepared by melt-bonding the respective spunbonded fabrics onto a tape containing 190 g/m² of T700 carbon fibers (Toray, Tokyo, Japan). The uni-directional tape was cut in the same manner as prepreg and laid-up according to BMS 8-276 as described above. The laid-up fabric was VARTM processed using an epoxy resin, TV-15, from Applied Poleramic, Inc. (Benicia, CA). After infusion and cure, the resulting panels were machined into 4" x 6" impact test specimens according to BSS7260. Impact was performed using a 0.3125" spherical steel tup. Four panels for each construction were tested.

After impact, all specimens were ultrasonically C-scanned. In these figures, a through-transmission amplitude plot and the bottom row shows a time-of-flight response was prepared. Impact damage areas were calculated directly from the center "hole" shown in the amplitude plots using the built-in software tool on the C-scan apparatus. These results are shown in Table 1.

Compression-after-impact strength results are shown in Table 2 and panel thicknesses and per-ply thicknesses are shown in Table 3. Tables 1 and 2 show significant decreases in impact damage area for the PA1008 and VI6010 interlayer materials as well as significant increases in compression-after-impact strength for these same materials, respectively. Table 3 shows that the interlayer-toughening concept meets the current commercial Boeing specification (BMS 8-276) for per-ply thickness.

**Table 1. Average Impact Damage Area for Three Panels vs. Control.**

| **Examples** | **Spunbonded Fabric** | **Impact Damage Area (in²)** | | | | **Percent Change in Impact Area** | | |
|---|---|---|---|---|---|---|---|---|
| | | **Interlayer Areal Weight** | | | | **Interlayer Areal Weight** | | |
| | | none | 0.125 oz/yd² | 0.250 oz/yd² | 0.375 oz/yd² | 0.125 oz/yd² | 0.250 oz/yd² | 0.375 oz/yd² |
| **Comparative** | Control | 7.134 | | | | N/A | N/A | N/A |
| 1 | PE2900 | | 8.258 | 8.632 | 10.037 | 15.8 | 21.0 | 40.7 |
| 2 | V16010 | | 4.529 | 3.936 | 2.093 | -36.5 | -44.8 | -70.,7 |
| 3 | PA1008 | | 1.489 | 1.160 | 0.619 | -79.1 | -83.7 | -91.3 |

**Table 2. Average Compression-After-Impact Strength for Three Panels vs. Control.**

| **Examples** | **CAI Strength (ksi)** | | | | **Percent Change CAI Strength** | | |
|---|---|---|---|---|---|---|---|
| | **Interlayer Areal Weight** | | | | **Interlayer Areal Weight** | | |
| | none | 0.125 oz/yd² | 0.250 oz/yd² | 0.375 oz/yd² | 0.125 oz/yd² | 0.250 oz/yd² | 0.375 oz/yd² |
| **Comparative** | 19.3 | | | | | | |
| 1 | | 17.2 | 15.6 | 13.8 | -10.9 | -19.2 | -28.6 |
| 2 | | 20.5 | 24.3 | 29.4 | 6.1 | 26.2 | 52.6 |
| 3 | | 30.6 | 27.8 | 39.6 | 58.6 | 44.4 | 105.3 |

**Table 3. Average Cured-Panel Thicknesses.**

| **Examples** | **Average Panel Thickness (in)** | | | | **Average Per-Ply Thickness (mil)*** | | | |
|---|---|---|---|---|---|---|---|---|
| | | | | | **Interlayer Areal Weight** | | | |
| | none | 0.125 oz/yd² | 0.250 oz/yd² | 0.375 oz/yd² | none | 0.125 oz/yd² | 0.250 oz/yd² | 0.375 oz/yd² |
| **Comparative** | 0.170 | | | | 7.08 | | | |
| 1 | | 0.175 | 0.185 | 0.186 | | 7.29 | 7.71 | 7.75 |
| 2 | | 0.173 | 0.182 | 0.180 | | 7.21 | 7.58 | 7.50 |
| 3 | | 0.177 | 0.189 | 0.187 | | 7.38 | 7.88 | 7.79 |

| | | | | | | | | |
|---|---|---|---|---|---|---|---|---|
| *calculated from average thickness/24 plies | | | | | | | | |

The above description of the invention is merely exemplary in nature and, thus, variations that do not depart from the gist of the present disclosure are intended to be within the scope hereof. Such variations are not to be regarded as a departure from the spirit and scope of the present, which is defined in the appended claims.

## Claims

1. A method for manufacturing a continuous multiaxial preform having a longitudinal direction and
comprising reinforcing layers (2) of unidirectional fiber with non-woven interlayers (6) disposed between the reinforcing layers (2), the method comprising:
melt-bonding an interlayer material comprising thermoplastic fibers with a high degree of melt bonding to one or both sides of a unidirectional dry fabric to produce a dry unidirectional tape; and
building up the multiaxial preform from the unidirectional tape by laying down at least four laminae of unidirectional tape at angles between -90 and +90° from the longitudinal direction of the multiaxial fabric,
the method comprising fetching the laminae by means of a support that moves in an advance direction parallel to the longitudinal direction, each lamina being fetched in successive segments that form the same selected angle relative to the directions of advance.

2. A method according to claim 1, further comprising stitching together the tape lamina with a knit thread.

3. A method according to claim 1, wherein the unidirectional dry fabric (14) comprises carbon fibers.

4. A method according to claim 1, wherein the lamina are laid-down in a 0/-45/+45/90 pattern.

5. A method of making a fiber reinforced composite material comprising infusing a preform with a thermosetting resin in a liquid molding process, wherein the preform is made by a process according to claim 1.

6. A method for manufacturing a multi-axial fabric comprising reinforcing layers (2) of unidirectional fiber with non-woven interlayers comprising a spunbonded, spun-laced, or mesh fabric of thermoplastic fibers disposed between and melt-bonded to the reinforcing layers, comprising:
pulling one or a plurality of tows across pins to create reinforcing layers of unidirectional fibers;
introducing an interlayer material to reside between the reinforcing layers (2); and
knitting the interlayer material to the reinforcing layers using a knit or sewing thread.

7. A method of making a fiber reinforced composite material comprising molding a preform and infusing the preform with a thermosetting resin in a liquid molding process, wherein the preform is made by a process according to claim 6.

8. A method of making a continuous multiaxial fiber sheet having a longitudinal direction, the method comprising superposing a plurality of unidirectional sheets in different directions and bonding the superposed sheets together,
wherein at least one of the unidirectional sheets is made by melt-bonding an interlayer material comprising thermoplastic fibers to one or both sides of a unidirectional dry fabric to produce a dry unidirectional tape with a high degree of melt bonding,
wherein more than 30% by weight of the thermoplastic fibers have a melting temperature below the temperature at which the melt bonding is carried out, and
wherein the continuous multiaxial sheet is made by fetching at least one unidirectional transverse sheet by means of a support that moves in an advance direction parallel to the longitudinal direction of the multiaxial sheet, the or each transverse unidirectional sheet being fetched in successive segments that form the same selected angle relative to the direction of advance.

9. A method according to claim 8, wherein the multiaxial sheet is formed by superposing two transverse unidirectional sheets at opposite angles relative to the direction of advance.

10. A method according to claim 8, wherein the multiaxial sheet is made by superposing at least two unidirectional sheets, one of the unidirectional sheets being a longitudinal sheet of direction parallel to the direction of advance.

11. A method according to claim 8, wherein the multiaxial sheet is made by superposing at least three unidirectional sheets, one of the unidirectional sheets being a longitudinal sheet of direction parallel to the direction of advance, and at least two other unidirectional sheets being transverse sheets of directions at different angles to the direction of the longitudinal sheet.
